# EUROPEAN PATENT SPECIFICATION

(11) **EP 2 373 508 B1**
(45) Date of publication and mention of the grant of the patent: **26.02.2014**
(21) Application number: 09830654.1
(22) Date of filing: 18.11.2009
(51) Int. Cl.: B60H 1/00, B60H 1/32

(54) **ARRANGEMENT FOR COOLING A CAB IN A VEHICLE**
ANORDNUNG ZUR KÜHLUNG EINER FAHRZEUGKABINE
DISPOSITIF DE REFROIDISSEMENT D UN HABITACLE DANS UN VÉHICULE

(30) Priority: 02.12.2008 SE 0802513
(43) Date of publication of application: 12.10.2011
(73) Proprietor: Scania CV AB, 151 87 Södertälje (SE)
(72) Inventor: KARDOS, Zoltan, S-151 35 Södertälje (SE); SÖDERBERG, Erik, S-111 29 Stockholm (SE)
(86) International application number: PCT/SE2009/051306
(87) International publication number: WO 2010/064971

(56) References cited:
- EP-A2- 0 488 553
- EP-A2- 0 660 055
- DE-A1- 19 629 114
- DE-C1- 3 933 935
- JP-A- 11 301 254
- US-A- 2 361 855
- US-A- 5 265 437
- US-A- 5 265 437

## Description

### BACKGROUND TO THE INVENTION, AND STATE OF THE ART

The present invention relates to an arrangement for cooling a cab in a vehicle according to the preamble of claim 1.

Cab here means a space for persons, e.g. driver and passengers, which is situated in the vehicle. AC installations are commonly used to cool cabs in heavy vehicles. A conventional AC installation comprises a compressor cooling installation which is provided with a line circuit with a circulating refrigerant, a compressor, a condenser, an expansion valve and an evaporator. During operation of AC installations, the compressor compresses the refrigerant in the circuit before it is led through a line to an air-cooled condenser situated at a front portion of the vehicle. The condenser is normally situated close to the radiator for cooling the coolant in the combustion engine's cooling system. The refrigerant is cooled in the condenser so that it changes to liquid form. The refrigerant is thereafter led to a throttle valve in which it undergoes pressure reduction. The refrigerant is led thereafter in a line to an evaporator in the vehicle's cab, in which it is vaporised. The air in the driving cab is cooled in the evaporator by the refrigerant. The gaseous refrigerant is thereafter led in a line back to the compressor for renewed compression.

The lines in a conventional AC installation are relatively long when the evaporator is situated in the cab and the condenser at the front portion of the vehicle. Refrigerants used in AC installations, e.g. carbon dioxide, require a high working pressure. Inter alia for strength reasons and because of the risk of refrigerant leakage, it is therefore advantageous for the lines in the AC installation to be as short as possible. The high pressure of the refrigerant means that the lines will be very difficult to bend. It is therefore not appropriate for the lines to be situated in regions where they will be subject to large bending stresses. Heavy vehicles are often provided with a cab which is resiliently suspended so that the driver has good comfort when the vehicle is travelling on uneven running surfaces. In many cases, cabs for heavy vehicles are also tiltable to increase accessibility for servicing and engine work. The running of lines in AC installations up from the vehicle's chassis to a movable driving cab in such a way that the lines are not subject to bending stresses when the cab undergoes movements relative to the vehicle's chassis is a problem.

EP 0 488 553 refers to a cooling system in a vehicle. The cooling system comprises a compressor cooling installation situated in an engine space of the vehicle. The compressor cooling installation conventionally comprises a line circuit with a circulating refrigerant, a compressor, a condenser, an expansion valve and an evaporator. The cooling system also comprises a heat transfer system in which a coolant is circulated in a closed line circuit which extends between the engine space and a cab of the vehicle. The coolant is cooled in the evaporator before being led to a heat exchanger in the driver's space. A fan forces an air flow through the heat exchanger so that effective cooling of the air in the driver's space is effected. In this case the whole of the compressor cooling installation is thus situated in the engine space, thereby reducing the length of the line circuit for the circulating refrigerant. Conventionally, however, the condenser of the compressor cooling installation is air-cooled and situated at the front portion of the vehicle in front of the radiator. The line circuit therefore entails relatively long lines for leading the refrigerant to and from the condenser. The compressor and the evaporator in this case are also fitted on opposite sides of the vehicle's engine, further increasing the length of the lines in the line circuit.

US 5 265 437 shows an arrangement according to the preamble of claim 1.

### SUMMARY OF THE INVENTION

The object of the present invention is to propose an arrangement for cooling a cab in a vehicle which comprises a compressor cooling installation which is very compact and itself comprises a very short line circuit for the circulating refrigerant.

These objects are achieved with the arrangement of the kind mentioned in the introduction which is characterised by the features indicated in the characterising part of claim 1. The arrangement thus comprises a compressor cooling installation for generating cold in a cab in a vehicle which may be a heavy vehicle. In a compressor cooling installation, cold is generated in an evaporator and heat in a condenser. The cab in the vehicle in which air is to be cooled is usually situated at a relatively large distance from a region of the vehicle in which it is appropriate to release heat. According to the invention, the first heat transfer system has the function of conveying cold from the evaporator of the compressor cooling installation to the cab. The second heat transfer system has the function of conveying heat from the condenser of the compressor cooling installation to the region in the vehicle where heat is to he released The compressor cooling installation thus need neither have the function of conveying cold to the cab nor that of conveying heat to said region of the vehicle, so its sole function may be the actual generation of cold. The components of the compressor cooling installation, e.g. the evaporator and the condenser, may therefore be situated very close together. The compressor cooling installation may thus be very compact and be provided with short lines between its components. A short line circuit for the refrigerant reduces the risk of leakage of the refrigerant.

According to a preferred embodiment of the present invention, the radiator in the second heat transfer system is air-cooled. The radiator is situated in a region of the vehicle through which there is a natural flow of air during operation. The radiator in the second heat transfer system is situated at a peripheral surface of the vehicle. In such a region the radiator will come into contact with air at the temperature of the surroundings. The coolant can thus be cooled to a temperature close to the temperature of the surroundings. The second heat transfer system comprises with advantage a fan adapted to generating a cooling air flow through the radiator, resulting in very effective cooling of the coolant in the radiator. The radiator in the second heat transfer system is with advantage situated in front of the ordinary radiator in a region at the front portion of the vehicle.

According to another preferred embodiment of the invention, the second heat transfer system comprises a pump adapted to circulating the coolant in the second line circuit. Such a pump may start the circulation of the coolant in the second heat transfer system when the cab is to be cooled and halt the circulation when the cab is not to be cooled. The second heat transfer system comprises at least a further heat exchanger for cooling at least a further medium in the vehicle. Such a heat exchanger is a charge air cooler for cooling of air which is led to the combustion engine or an EGR cooler for cooling of recirculating exhaust gases which are mixed with air before it is led to the combustion engine, in which case the second heat transfer system may be referred to as a low-temperature cooling system with a coolant which will be at a considerably lower temperature than the temperature of the coolant in an ordinary cooling system for cooling the vehicle's engine.

According to the invention, the compressor cooling installation is situated in an engine space in the vehicle. Here the compressor cooling installation may have a protected location which at the same time facilitates servicing of the compressor cooling installation. The compressor cooling installation may be capable of being fitted as a unit in the vehicle, thereby facilitating the work of fitting the compressor cooling installation in the vehicle in that all of its components and the lines between them will already have been assembled.

According to the invention, the cab is movable relative to a chassis of the vehicle. In heavy vehicles, the cab is usually resiliently suspended to provide greater comfort for the driver when the vehicle is travelling on uneven running surfaces. In many cases the cab is also tiltable to expose the components in the engine space during servicing and repair work. The first heat transfer system comprises a line circuit which at least in a transfer region between the chassis and the cab takes the form of lines made of flexible material. The coolant in the first heat transfer system is conveyed at a relatively small positive pressure in the line circuit. The relatively low positive pressure of the coolant allows bending of the flexible lines containing the coolant when they are subjected to bending stresses. The risk of line damage and leakage due to movements of the cab during operation and on occasions when the cab is tilted is thus eliminated.

### BRIEF DESCRIPTION OF THE DRAWING

Preferred embodiments of the invention are described below by way of examples with reference to the attached drawing, in which:
- Fig. 1: depicts an arrangement for cooling a cab in a vehicle. and
- Fig. 2: depicts an arrangement for cooling a cab in a vehicle according to an embodiment of the invention.

### DETAILED DESCRIPTION OF PREFERRED EMBODIMENTS OF THE INVENTION

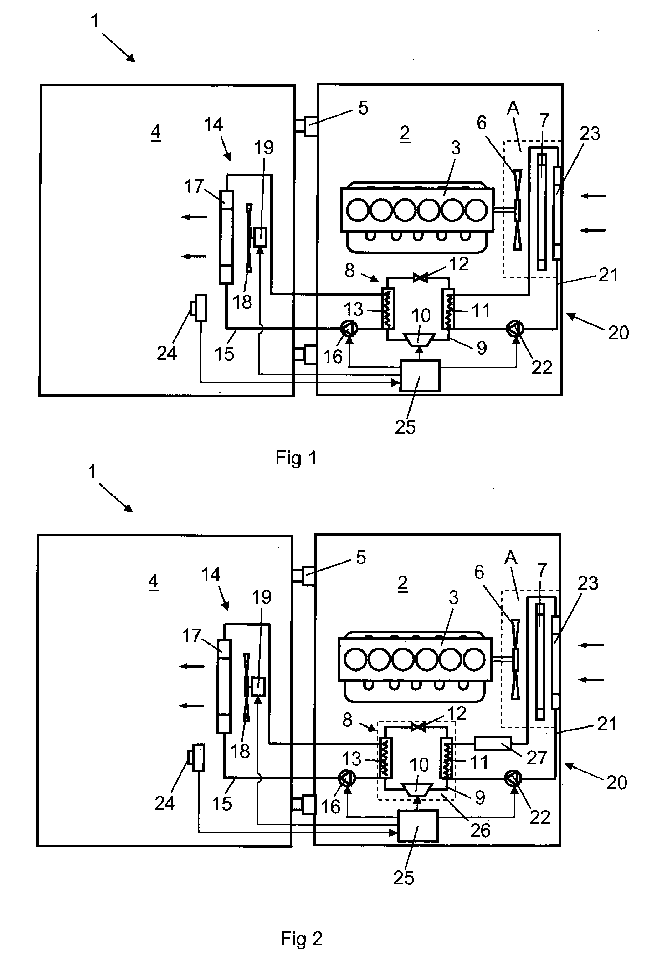

Fig. 1 depicts schematically a vehicle 1. The vehicle comprises an engine space 2 with a combustion engine 3. The vehicle 1 comprises a driving cab 4 which is resiliently suspended in the vehicle's chassis via schematically depicted suspension means 5. A cooling fan 6 driven by the combustion engine 3 is adapted to generating an air flow through a radiator 7 to cool coolant which circulates in a cooling system for cooling the combustion engine 3. The radiator 7 is situated in a region A at a front portion of the vehicle 1. An arrangement for cooling the air in the cab 4 comprises a compressor cooling installation 8 situated in the engine space 2. The compressor cooling installation comprises a line circuit 9 with a circulating refrigerant, a compressor 10, a condenser 11, an expansion valve 12 and an evaporator 13. The refrigerant may for example be carbon dioxide.

The arrangement for cooling the air in the cab 4 comprises also a first heat transfer system 14 comprising a line circuit 15 with a coolant which is intended to be circulated by a pump 16. The line circuit 15 comprises a heat exchanger 17 situated in the cab 4 and a cooling fan 18 adapted to being driven by an electric motor 19 in order to generate air flow through the heat exchanger 17. The line circuit 15 comprises lines made of flexible material. The coolant in the first heat transfer system 14 is cooled when it is led through the evaporator 13 of the compressor cooling installation 8. The arrangement for cooling the air in the cab 4 comprises also a second heat transfer system 20 situated in the engine space 2. The second heat transfer system 20 comprises a second line circuit 21 with a coolant intended to be circulated by a pump 22. The line circuit 21 comprises a radiator 23 situated in the region A at a location in front of the ordinary radiator 7. The coolant in the second heat transfer system 20 cools the refrigerant in the compressor cooling installation 8 when it is led through the condenser 11

During operation of the vehicle 1, a driver can when necessary activate the arrangement and cool the air in the cab 4. When the driver activates an operating means 24, which may be a button means or the like, a signal is sent to a control unit 25, which starts the compressor 10 in the compressor cooling installation 8. The control unit 25 activates simultaneously the pump 16 so that the coolant is circulated in the first heat transfer system 14, the electric motor 19 which drives the fan 18, and the pump 22 so that the coolant is circulated in the second heat transfer system 20. The compressor 10 compresses and drives the refrigerant in the line circuit 9. The compressed refrigerant is led in a short line in the line circuit 9 to the condenser 11. The circulating coolant in the second heat transfer system 20 cools the refrigerant in the condenser 11 so that the refrigerant condenses. The refrigerant, which will then be in liquid form, is thereafter led to the expansion valve 12 where it undergoes a pressure reduction. The refrigerant is thereafter led in a short line in the line circuit 9 to the evaporator 13, in which the refrigerant cools the coolant in the first heat transfer system 14. The refrigerant changes to gas form in the evaporator 13 before being led back to the compressor 10 for renewed compression.

The coolant which circulates in the first heat transfer system 14 is thus cooled in the evaporator 13. The cooled coolant is led through a line in the line circuit 15 which extends from the evaporator 13 in the engine space 2 to the heat exchanger 17 in the cab 4. The air in the cab 4, which is forced by the fan 18 through the heat exchanger 17, is cooled by the cold coolant. The coolant in the first heat transfer system 14 is thereafter led back to the evaporator 13 in the engine space 2 via a line in the line circuit 15 for renewed cooling. As the driving cab 4 is movable relative to the engine space 2, which is firmly connected to the vehicle's chassis, the lines which extend between the engine space 2 and the driving cab 4 are inevitably subject to bending stresses during operation. The pump 16 in the first heat transfer system 14 gives the coolant a pressure of about 1.5 - 2 bar to make circulation of the coolant in the line circuit 15 possible. However, this pressure is so low that the lines which lead the coolant in the line circuit 15 between the engine space 2 and the driving cab 4 are bendable, so the bending stresses which act upon the lines during operation are not a problem.

The coolant which is circulated in the second heat transfer system 20 thus cools the refrigerant in the condenser 11. The warm coolant from the condenser 11 is led in a line in the line circuit 21 to the radiator 23 in the region A at the front portion of the vehicle 1. Air at the temperature of the surroundings is forced by the fan 6 through the radiator 23 before being led through the ordinary radiator 7. The coolant in the second heat transfer system 20 thus undergoes effective cooling and can be cooled to a temperature close to the temperature of the surroundings. The coolant in the second heat transfer system 20 is thereafter led back to the condenser 11. The second heat transfer system 20 thus has the function of conveying heat from the compressor cooling installation 8 to the front portion of the vehicle. The first heat transfer system 14 has the function of conveying cold from the compressor cooling installation 8 to the driving cab 4. The compressor cooling installation 8 thus does not have the function of conveying cold to the cab 4 or heat to the region A but only the function of generating cold. Such a compressor cooling installation 8 may be situated at substantially any desired location in the vehicle 1. The condenser 11 and the evaporator 13 may with advantage be situated close together. This makes it possible for the compressor cooling installation 8 to be very compact and be provided with a line circuit 9 with optimally short lines.

Fig. 2 depicts an alternative configuration of the arrangement. In this case the compressor cooling installation 8 is fitted as a unit 26 in the vehicle. The whole of the compressor cooling installation 8 with its components and lines can thus be fitted as a composite item in the engine space 2. The line circuit 9 may also be pressure-tested and filled with refrigerant before the compressor cooling installation 8 is fitted in the vehicle 1. As refrigerants such as carbon dioxide have very high working pressures, such preassembly may often be preferable.

The second heat transfer system 20 takes the form here of a low-temperature cooling system in the vehicle which is also used for cooling other media in the vehicle which need cooling to a relatively low temperature. Such a low-temperature cooling system therefore comprises at least a further heat exchanger 27 for cooling a further medium. The heat exchanger 27 may for example be a charge air cooler in which compressed air is cooled before it is led to the combustion engine. The heat exchanger 27 may also be an EGR cooler in which recirculating exhaust gases are cooled before they are mixed with air and led to the combustion engine 1. One or more such extra heat exchangers 27 may be arranged in series or in parallel in the second heat transfer system 20.

The invention is in no way limited to the embodiments to which the drawing refers but may be varied freely within the scopes of the claims.

## Claims

1. An arrangement for cooling a cab (4) in a vehicle (1), which arrangement comprises a compressor cooling installation (8) situated in an engine space of the vehicle (1), and a first heat transfer system (14), which compressor cooling installation (8) comprises a line circuit (9) with a circulating refrigerant, an evaporator (13) in which the refrigerant is intended to be vaporised, and a condenser (11) in which the refrigerant is intended to condense, and which first heat transfer system (14) comprises a line circuit (15) with a circulating coolant which is intended to be cooled by the refrigerant in the evaporator (13) and to release cold in a heat exchanger (17) situated in the cab (4), and a second heat transfer system (20) comprising a second line circuit (21) with a circulating coolant which is intended to absorb heat from the refrigerant in the condenser (11) and to release heat in an air cooled radiator (23) which is situated in region (A) at a peripheral surface of the vehicle (1), **characterised in that** the cab (4) is movable relative to a chassis of the vehicle (1) and that the first heat transfer system (14) comprises a line circuit (15) which at least in a transfer region between the chassis (2) and the cab (4) takes the form of lines made of flexible material and that the second heat transfer system (20) comprises at least a further heat exchanger (27) in the form of a charge air cooler for cooling of air which is led to a combustion engine or an EGR cooler for cooling of recirculating exhaust gases.

2. An arrangement according to claim 1, **characterised in that** the second heat transfer system (20) comprises a fan (6) adapted to generating a cooling air flow through the radiator (23).

3. An arrangement according to claim 1 or 2, **characterised in that** the second heat transfer system (20) comprises a pump (22) adapted to circulating the coolant in the second line circuit (21).

4. An arrangement according to any one of the foregoing claims, **characterised in that** the compressor cooling installation (8) is fittable as a unit in the vehicle (1).

## Patentansprüche

1. Anordnung zum Kühlen eines Fahrerhauses (4) in einem Fahrzeug (1),
wobei die Anordnung eine Kompressor-Kühlanordnung (8) umfasst, die in einem Motorraum des Fahrzeugs (1) angeordnet ist, und ein erstes Wärmeübertragungssystem (14), wobei die Kompressor-Kühlanordnung (8) einen Leitungskreislauf (9) mit einem zirkulierenden Kältemittel umfasst, einen Verdampfer (13), der dazu vorgesehen ist, das Kältemittel darin zu verdampfen, und einen Kondensator (11), der dazu vorgesehen ist, das Kältemittel zu kondensieren, und wobei das erste Wärmeübertragungssystem (14) einen Leitungskreislauf (15) mit einem zirkulierenden Kühlmittel umfasst, das durch das Kältemittel in dem Verdampfer (13) gekühlt wird und dazu vorgesehen ist, in einem in dem Fahrerhaus (4) angeordneten Wärmetauscher (17) Kälte abzugeben, und ein zweites Wärmeübertragungssystem (20), das einen zweiten Leitungskreislauf (21) mit einem zirkulierenden Kühlmittel umfasst, das dazu vorgesehen ist, Wärme von dem Kältemittel in dem Kondensator (11) zu absorbieren und in einem luftgekühlten Radiator (23), der in einem Bereich (A) an einer äußeren Fläche des Fahrzeugs (1) angeordnet ist, Wärme abzugeben,
**dadurch gekennzeichnet, dass** das Fahrerhaus (4) relativ zu dem Fahrgestell des Fahrzeugs (1) bewegbar ist und dass das erste Wärmeübertragungssystem (14) einen Leitungskreislauf (15) umfasst, der zumindest in einem Übertragungsbereich zwischen dem Fahrgestell (2) und dem Fahrerhaus (4) in Form von Leitungen aus einem flexiblen Material ausgebildet ist und dass das zweite Wärmeübertragungssystem (20) zumindest einen weiteren Wärmetauscher (27) in Form eines Ladeluftkühlers umfasst, zum Kühlen von Luft, die zu einem Verbrennungsmotor oder einem EGR-Kühler zum Kühlen von rückgeführten Abgasen geleitet wird.

2. Anordnung gemäß Anspruch 1,
**dadurch gekennzeichnet, dass** das zweite Wärmeübertragungssystem (20) einen Ventilator (6) umfasst, der dazu eingerichtet ist, einen Kühlluftstrom durch den Radiator (23) zu erzeugen.

3. Anordnung gemäß Anspruch 1 oder 2,
**dadurch gekennzeichnet, dass** das zweite Wärmeübertragungssystem (20) eine Pumpe (22) umfasst, die dazu eingerichtet ist, das Kühlmedium in dem zweiten Leitungskreislauf (21) zu zirkulieren.

4. Anordnung gemäß einem der vorangehenden Ansprüche,
**dadurch gekennzeichnet, dass** die Kompressor-Kühlanordnung (8) als eine Einheit in das Fahrzeug (1) einbaubar ist.

## Revendications

1. Agencement pour le refroidissement d'une cabine (4) dans un véhicule (1), lequel agencement comprend une installation de refroidissement à compresseur (8) située dans un compartiment moteur du véhicule (1), et un premier système de transfert de chaleur (14), laquelle installation de refroidissement à compresseur (8) comprend un circuit de conduites (9) dans lequel circule un réfrigérant, un évaporateur (13) dans lequel le réfrigérant est destiné à être vaporisé, et un condenseur (11) dans lequel le réfrigérant est destiné à se condenser, et lequel premier système de transfert de chaleur (14) comprend un circuit de conduites (15) dans lequel circule un fluide caloporteur qui est destiné à être refroidi par le réfrigérant dans l'évaporateur (13) et à dégager du froid dans un échangeur de chaleur (17) situé dans la cabine (4), et un second système de transfert de chaleur (20) comprenant un second circuit de conduites (21) dans lequel circule un fluide caloporteur qui est destiné à absorber la chaleur provenant du réfrigérant dans le condenseur (11) et à dégager de la chaleur dans un radiateur à refroidissement par air (23) qui est situé dans une région (A) sur une surface périphérique du véhicule (1), **caractérisé en ce que** la cabine (4) est mobile par rapport à un châssis du véhicule (1) et **en ce que** le premier système de transfert de chaleur (14) comprend un circuit de conduites (15) qui, au moins dans une région de transfert entre le châssis (2) et la cabine (4), se présente sous la forme de conduites en matériau souple, et **en ce que** le second système de transfert de chaleur (20) comprend au moins un échangeur de chaleur supplémentaire (27) sous la forme d'un refroidisseur d'air de suralimentation pour refroidir l'air qui est envoyé à un moteur à combustion ou un refroidisseur RGE pour refroidir les gaz d'échappement en recirculation.

2. Agencement selon la revendication 1, **caractérisé en ce que** le second système de transfert de chaleur (20) comprend un ventilateur (6) apte à générer un courant d'air de refroidissement à travers le radiateur (23).

3. Agencement selon la revendication 1 ou 2, **caractérisé en ce que** le second système de transfert de chaleur (20) comprend une pompe (22) apte à faire circuler le fluide caloporteur dans le second circuit de conduites (21).

4. Agencement selon l'une quelconque des revendications précédentes, **caractérisé en ce que** l'installation de refroidissement à compresseur (8) peut être montée d'un seul bloc dans le véhicule (1).
